**Europäisches Patentamt**

**European Patent Office**

**Office européen des brevets**

(11) Veröffentlichungsnummer: **0 178 620**
**B1**

## (12) EUROPÄISCHE PATENTSCHRIFT

(45) Veröffentlichungstag der Patentschrift:
**24.05.89**

(21) Anmeldenummer: **85113020.3**

(22) Anmeldetag: **14.10.85**

(51) Int. Cl.⁴: **B 25 J 18/06**, B 25 J 17/02 //
F16H1/00

(54) **Robotergelenkanordnung.**

(30) Priorität: **16.10.84 DE 3437869**

(43) Veröffentlichungstag der Anmeldung:
**23.04.86 Patentblatt 86/17**

(45) Bekanntmachung des Hinweises auf die Patenterteilung:
**24.05.89 Patentblatt 89/21**

(84) Benannte Vertragsstaaten:
**DE FR IT SE**

(56) Entgegenhaltungen:
**EP-A- 0 074 882**
**EP-A- 0 101 569**
**FR-A- 2 539 664**

(73) Patentinhaber: **Siemens Aktiengesellschaft Berlin und München, Wittelsbacherplatz 2, D-8000 München 2 (DE)**

(72) Erfinder: **Keppler, Rainer, Gartenstrasse 24,
D-8523 Baiersdorf (DE)**
Erfinder: **Kleemann, Robert, Volckamer Strasse 9,
D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Robotergelenkanordnung mit zwei hintereinander angeordneten Gelenken zur Schwenkbewegung in zwei zueinander senkrechten Schwenkachsen, bei der

a) der elektrische Motor und das axial anschliessende Untersetzungsgetriebe des ersten Gelenkes unmittelbar auf einen mechanischen Anschluss zum vorhergehenden Roboterteil folgen,

b) das erste Gelenk am entgegengesetzten Ende einen gabelartigen Fortsatz hat,

c) das zweite Gelenk mit elektrischem Motor, Untersetzungsgetriebe und einem Ankuppelflansch für das nachfolgende Roboterteil schwenkbar im gabelartigen Fortsatz des ersten Gelenkes angeordnet ist und

d) die Drehung des abtreibenden Teiles des Untersetzungsgetriebes des ersten Gelenkes über eine kraftschlüssige Verbindung in eine Schwenkbewegung des zweiten Gelenkes umsetzbar ist.

Eine solche Konstruktion ist beispielsweise aus der EP-A-2 074 882 bekannt.

Industrieroboter sollen modular in Form eines Baukastensystems zusammensetzbar sein, relativ wenig Platz benötigen und günstig für Montage und Wartung sein. Ferner wird im allgemeinen eine hohe Verfahrgeschwindigkeit und Positionsgenauigkeit gefordert, d.h., es darf nur sehr wenig Spiel in der Kraftübertragung auftreten. Die bekannten Lösungen befriedigen nicht ganz in dieser Hinsicht (vgl. z.B. FR-A-25 49 664).

Für schnelle Greifer- oder Werkzeugorientierungen ist es vor allem für die unmittelbar am Greifer oder Werkzeug anschliessenden Gelenke von Interesse, dass die Drehachse eines Gelenkes und Flanschfläche des nächsten Gelenkes nahe zusammenliegen.

Die Aufgabe der vorliegenden Erfindung besteht in einer Konstruktion, mit der die vorgenannten Forderungen erfüllt werden, aber gleichzeitig hohe Positioniergenauigkeit und schnelle Verfahrbarkeit erhalten bleiben.

Diese Aufgabe wird erfindungsgemäss durch folgende Merkmale gelöst:

e) das Untersetzungsgetriebe ist mit einem axial und radial gelagerten Flansch gekuppelt, wobei das axiale Lager vorgespannt ist,

f) ein stirnseitig auf dem Flansch angeordnetes Kegelrad greift in ein auf einer hierzu senkrechten Welle angeordnetes, weiteres Kegelrad ein,

g) die Drehbewegung dieser parallel zur Schwenkachse für das zweite Gelenk liegenden Welle ist über in der gabelartigen Fortsetzung in der Ebene einer Wellenlagerung liegende Zahnräder in die Schwenkbewegung des auf einer geteilten Welle schwenkbar gelagerten zweiten Gelenkes umsetzbar,

h) die Schwenkachse für das zweite Gelenk verläuft in etwa durch dessen Schwerpunkt.

Auf diese Weise sind sehr schnelle und trotzdem präzise Greif- und Werkzeugorientierungen möglich. Ferner werden die auftretenden Massenträgheitskräfte verhältnismässig gering gehalten, so dass hohe Verfahrgeschwindigkeiten zulässig sind.

Anhand eines in der Zeichnung dargestellten Ausführungsbeispiels sei die Erfindung näher beschrieben; es zeigen:

Figur 1 ein Gelenk und

Figur 2 ein im vorstehend genannten Gelenk lagerbares Gelenk.

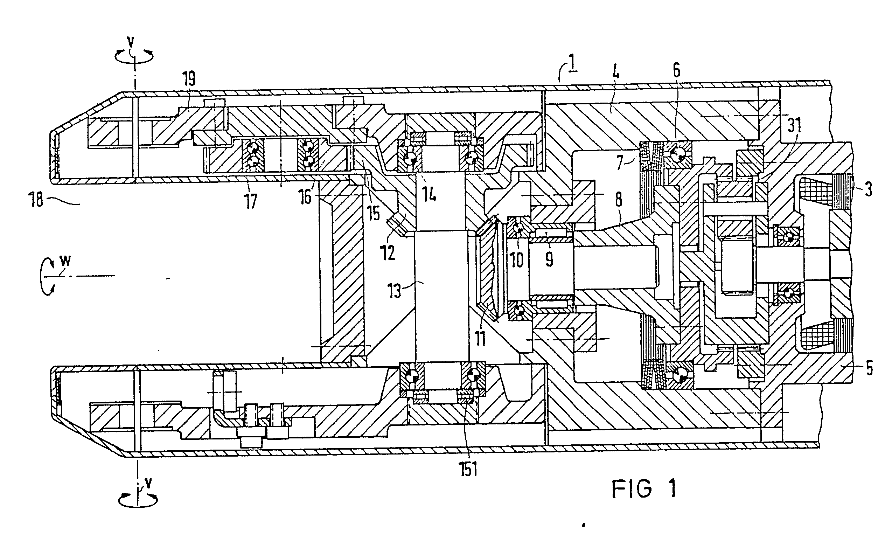

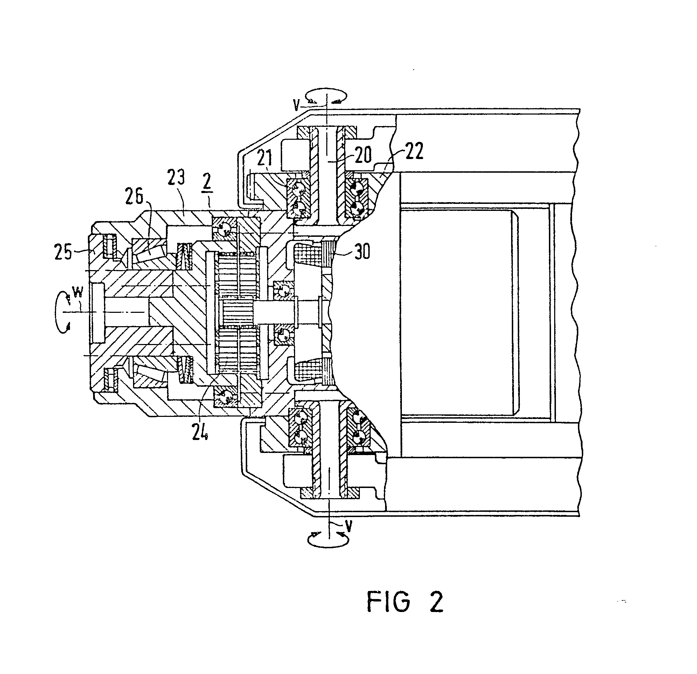

Das in der gabelartigen Fortsetzung 19 des Gelenkes 1 (Figur 1) lagerbare Gelenk 2 (Figur 2) ist um die Schwenkachse v des Gelenkes 1 schwenkbar. Hierzu senkrecht liegt die Schwenkachse w des Gelenkes 2.

Das Gelenk 1 besteht aus einem rohr- bzw. kastenförmigen Gehäuse 4, das an einem Ende durch ein Gehäuse 5 abgeschlossen ist. Über das Gehäuse 4 ist die Gelenkanordnung an einen vorhergehenden, nicht gezeigten Roboterarm ankuppelbar. Innerhalb des Gehäuses 5 ist ein Elektromotor 3 angeordnet, dem axial ein Untersetzungsgetriebe 31, z.B. ein Planetengetriebe, nachgeschaltet ist. An das über Kugellager 6 am Gehäuse 4 abgestützte Untersetzungsgetriebe 31 ist in axialer Längsrichtung ein Flansch 8 angekuppelt, dessen Welle radial über ein Rollenlager 9 und axial über ein Lager 10 an einem mit dem Gehäuse 4 verbundenen Teil abgestützt ist. Das Lager 10 ist dabei durch die Feder 7 vorgespannt.

Die Welle des Flansches 8 trägt stirnseitig ein Kegelrad 11, das mit einem Kegelrad 12 auf einer Welle 13 kämmt. Die Welle 13 liegt dabei senkrecht zur Längsachse des Flansches 8. Die Welle 13 selbst ist wiederum radial in Rollenlagern 14 und axial in Lagern 151 gelagert.

Die über das Kegelrad 11 auf die Welle 13 übertragene Drehbewegung des Motors 3 wird mittels des baulich mit dem Rad 12 verbundenen Zahnrades 15 auf ein Zwischenzahnrad 16 übertragen, das in einer Lagerung 17 gehalten ist. Im vordersten Teil 18 der gabelförmigen Fortsetzung 19 des Gelenkes 1 ist dann eine geteilte Welle 20 (Figur 2) drehfest anzuordnen, auf der mittels Lager 21 das Gelenk 2 schwenkbar ist. In der Höhe des Lagers 21 ist ein Zahnrad 22 vorgesehen, welches mit dem Gehäuse 23 des Gelenkes 2 verbunden ist und mit dem Zwischenzahnrad 16 im eingebauten Zustand kämmt. Bei einer Drehung des Motors 3 wird dadurch über die beschriebene kraftschlüssige Verbindung das Gelenk 2 um die geteilte Welle 20 geschwenkt.

Das Gelenk 2 enthält ebenfalls einen Elektromotor 30 mit entsprechenden Regelanordnungen, ein nachfolgendes axiales Untersetzungsgetriebe 24 und dem ebenfalls über vorgespannte Kegelrollenlager 26 abgefangenen Anbauflansch 25, an dem das nächste, nichtgezeigte Roboterteil, im Regelfall das Werkzeug, zwecks Drehung in der W-Achse ankuppelbar ist.

Wie ersichtlich, wird im zusammengebauten Zustand das Gelenk 2 zu einem erheblichen Teil von der gabelartigen Fortsetzung 19 des Gelenks 1 umfasst und die Schwenkachse v so durch das Gelenk 2 gelegt, dass sie in etwa durch den Schwerpunkt geht.

Durch die vorstehend beschriebene Konstruktion erhält man einen sehr kurzen Abstand zwischen Schwenkachse und Werkzeugspannfläche.

## Patentanspruch

Robotergelenkanordnung mit zwei hintereinander angeordneten Gelenken zur Schwenkbewegung in zwei zueinander senkrechten Schwenkachsen, bei der

a) der elektrische Motor (3) und das axial anschliessende Untersetzungsgetriebe (31) des ersten Gelenkes (1) unmittelbar auf einen mechanischen Anschluss zum vorhergehenden Roboterteil folgen,

b) das erste Gelenk (1) am entgegengesetzten Ende einen gabelartigen Fortsatz (19) hat,

c) das zweite Gelenk (2) mit elektrischem Motor (30), Untersetzungsgetriebe (24) und einem Ankuppelflansch (25) für das nachfolgende Roboterteil schwenkbar im gabelartigen Fortsatz (19) des ersten Gelenkes (1) angeordnet ist und

d) die Drehung des abtreibenden Teiles des Untersetzungsgetriebes (31) des ersten Gelenkes über eine kraftschlüssige Verbindung (8, 11, 12, 16) in eine Schwenkbewegung des zweiten Gelenkes (2) umsetzbar ist, gekennzeichnet durch folgende Merkmale:

e) das Untersetzungsgetriebe (31) ist mit einem axial und radial gelagerten Flansch (8) gekuppelt, wobei das axiale Lager (9, 10) vorgespannt ist,

f) ein stirnseitig auf dem Flansch (8) angeordnetes Kegelrad (11) greift in ein auf einer hierzu senkrechten Welle (13) angeordnetes, weiteres Kegelrad (12) ein,

g) die Drehbewegung dieser parallel zur Schwenkachse (v) für das zweite Gelenk (2) liegenden Welle (13) ist über in der gabelartigen Fortsetzung (19) in der Ebene einer Wellenlagerung liegende Zahnräder (16, 22) in die Schwenkbewegung des auf einer geteilten Welle (20) schwenkbar gelagerten zweiten Gelenkes (2) umsetzbar,

h) die Schwenkachse (v) für das zweite Gelenk (2) verläuft in etwa durch dessen Schwerpunkt.

## Revendication

Dispositif pour les joints articulés de robots, comprenant deux joints d'articulation placés l'un derrière l'autre et destinés à des mouvements de pivotement autour de deux axes de pivotement mutuellement perpendiculaires, dans lequel

a) le moteur électrique (3) et l'engrenage réducteur (31) s'y raccordant axialement du premier joint (1) font directement suite à un raccordement mécanique à la partie de robot précédente,

b) le premier joint (1) possède un prolongement en forme de fourche (19) à l'extrémité opposée,

c) le second joint (2), y compris son moteur électrique (30), un engrenage réducteur (24) et une bride d'accouplement (25) pour la partie de robot suivante, est disposé pivotant dans le prolongement en forme de fourche (19) du premier joint (1) et

d) la rotation de la partie menée de l'engrenage réducteur (31) du premier joint est transformable en un pivotement du second joint (2) par une liaison par action de force (8, 11, 12, 16), caractérisé en ce que:

e) l'engrenage réducteur (31) du premier joint est accouplé à une bride (8) montée rotative par des paliers axial et radial, avec précontrainte du palier axial (9, 10),

f) une roue conique (11) portée par une extrémité frontale de la bride (8) engrène avec une autre roue conique (12) portée par un arbre (13) transversal à la bride,

g) le mouvement de rotation de cet arbre (13), lequel est parallèle à l'axe de pivotement (v) pour le second joint (2), est transformable en un pivotement du second joint (2) par des roues dentées (16, 22) situées dans le plan d'un palier d'arbre dans le prolongement en forme de fourche (19), le second joint (2) étant monté pivotant sur un arbre divisé (20) et

h) l'axe de pivotement (V) pour le second joint (2) passe à peu près par le centre de gravité de ce joint.

## Claim

Robot articulated joint arrangement with two articulated joints, arranged one behind the other, for the rotating motion about two axes of rotation which are perpendicular to each other, whereby

a) the electric motor (3) and the axially connecting reduction gearing (31) of the first articulated joint (1) follow immediately after a mechanical connection to the preceding robot part,

b) On the opposite end, the first articulated joint (1) has a forked extension (19),

c) the second articulated joint (2) with electric motor (30), reduction gearing (24) and a coupling flange (25) for the following robot part is arranged in the forked extension (19) of the first articulated joint (1) so that it can be rotated, and

d) the rotation of the driving part of the reduction gearing (31) of the first articulatd joint can be converted into a rotating motion of the second articulated joint (2) by means of a frictional connection (8, 11, 12, 16), characterized by the following features:

e) the reduction gearing (31) is coupled with an axially and radially mounted flange (8), the axial bearing (9, 10) being prestressed,

f) a bevel gear (11), arranged on the front end of the flange (8), engages a further bevel gear (12), arranged on a shaft (13) perpendicular to it,

g) the rotating motion of this shaft (13), lying parallel to the rotating axis (v) for the second articulated joint (2), can be converted into the rotating motion of the second articulated joint (2), mounted on a split shaft (20) so that it can be rotated, by means of gear wheels (16, 22), lying in the forked continuation (19) on the plane of a shaft bearing,

h) the axis of rotation (v) for the second articulated joint (2) extends approximately through the latter's centre of gravity.

1/2     84 P 6806

FIG 1

2/2     84 P 6806

FIG 2